# FASCICULE DE BREVET EUROPEEN

(11) **EP 2 995 498 B1**
(45) Date de publication et mention de la délivrance du brevet: **03.01.2018**
(21) Numéro de dépôt: 15184540.1
(22) Date de dépôt: 09.09.2015
(51) Int. Cl.: B60N 2/235

(54) **DISPOSITIF DE RÉGLAGE ANGULAIRE À PAS RÉDUIT POUR SIÈGE DE VÉHICULE**
VORRICHTUNG ZUR WINKELEINSTELLUNG MIT KLEINEN ABSTUFUNGEN FÜR FAHRZEUGSITZ
DEVICE FOR ADJUSTING THE TILT OF A VEHICLE SEAT BY SMALLER INCREMENTS

(30) Priorité: 12.09.2014 FR 1458572
(43) Date de publication de la demande: 16.03.2016
(60) Demande divisionnaire: 17193825.1
(73) Titulaire: FAURECIA Sièges d'Automobile, 92000 Nanterre (FR)
(72) Inventeur: Gallienne, Didier, 61100 Landigou (FR); Grimaud, Damien, 61100 Caligny (FR)
(74) Mandataire: Cabinet Plasseraud

(56) Documents cités:
- WO-A2-2004/080748
- DE-B3-102005 026 966
- FR-A1- 2 920 713
- US-A1- 2007 040 435
- US-A1- 2014 159 458

## Description

La présente invention est relative aux articulations et dispositifs de réglage angulaire pour siège de véhicule, et concerne en particulier les articulations de dossier de siège à réglage discontinu.

Plus précisément, l'invention a pour objet une articulation de siège de véhicule un automobile permettant un réglage angulaire d'un dossier de siège par rapport à une assise de siège autour d'un axe principal d'articulation, comprenant des premier et deuxième flasques d'articulation destinés à être liés solidairement respectivement auxdits dossier et assise du siège, le premier flasque comprenant une denture de base sur une bordure circulaire dirigée radialement vers l'intérieur, avec N dents régulièrement espacées d'un pas angulaire de base de 360/N degrés. Par ailleurs, une telle articulation comprend en outre des grains de verrouillage dentés déplaçables et guidés par rapport au deuxième flasque selon un déplacement radial, entre une position d'engagement où les dents des grains sont engagées dans la denture du premier flasque en vis-à-vis, et une position de dégagement dans laquelle il n'y a pas d'engagement mutuel des dents. Une came de commande associée à une plaque de commande permet de déplacer radialement les grains de verrouillage entre les deux positions susmentionnées. On obtient ainsi une articulation qui peut être verrouillée dans une des positions possibles de verrouillage, les différentes positions possibles étant séparées d'un écart angulaire (aussi appelé « pas de verrouillage ») de 360/N degrés. Dans l'art connu, la denture du premier flasque comprend un nombre de dents compris entre 100 et 200, ce qui correspond à un pas de verrouillage compris entre 3,6 degrés et 1,8 degré.

On connait une telle articulation de siège, par exemple à partir du document FR2977204.

Il est souhaitable de pouvoir diminuer le pas de verrouillage pour offrir un nombre accru de positions possibles de réglage pour le confort des occupants du siège ; en particulier on cherche à obtenir un pas de verrouillage inférieur à 1,5 degré voire préférentiellement même inférieur à 1 degré.

On forme habituellement les dents des dentures avec un profil généralement triangulaire.

La solution qui consisterait à augmenter le nombre de dents se heurte à un problème basique de géométrie car, au fur et à mesure qu'on augmente le nombre de dents la profondeur de dents diminue et par conséquent la profondeur d'engagement diminue aussi. Or les exigences de sécurité qui requièrent le maintien de la position en cas de choc subi par le véhicule impliquent un engagement relativement important entre les dents des grains déplaçables et la denture de base du flasque, ceci à fin de garantir une robustesse importante en cas de choc.

Il est donc apparu le besoin de proposer une solution qui permette d'obtenir un pas de verrouillage plus fin tout en continuant à répondre aux exigences de sécurité imposées à l'articulation entre dossier et assise.

A cet effet, selon l'invention, une articulation de siège du genre en question comprend :
- un ensemble de P sous-ensembles de grains dentés dont au moins :
- un premier sous-ensemble d'un ou plus premier grain coopérant avec une première came de commande rappelée par un ou plusieurs premiers ressorts,
- un second sous-ensemble d'un ou plus second grain coopérant avec une seconde came de commande rappelée par un ou plusieurs seconds ressorts,
   les premier et second grains étant déplaçables au moins radialement, guidés par des guides formés dans le second flasque et comprenant des dents pour venir en engagement avec la denture de base, les premier et second grains étant déplaçables entre une position d'engagement où les dents des grains sont engagées dans la denture de base en vis-à-vis, et une position de dégagement dans laquelle il n'y a pas d'engagement mutuel des dents,
- un moyeu de commande apte à déplacer les première et seconde cames de commande vers une position de déverrouillage, alors que les premiers et seconds ressorts sollicitent indépendamment les première et seconde cames vers une position de verrouillage,
dans lequel les dentures du ou des premier(s) grain(s) sont décalées angulairement autour de l'axe par rapport aux dentures du ou des second(s) grain(s), d'un écart sensiblement égal à (K + 1/P) 360/N degrés, K étant entier.

Moyennant quoi un seul parmi les sous-ensembles de grains se retrouve en position complète d'engagement alors que les grains des autres sous-ensembles se retrouvent en position partiellement engagée ou dent sur dent, et on peut ainsi obtenir un pas de verrouillage divisé par P par rapport au pas de la denture base, en l'occurrence inférieur à 1,5 degré voire préférentiellement même inférieur à 1 degré.

Ainsi on peut améliorer le confort de l'utilisateur du siège qui dispose d'un pas de réglage et d'ajustement plus fin.

On comprend que si le ou les grains d'un premier sous-ensemble est en position d'engagement, et que l'on souhaite modifier la position du dossier d'un angle correspondant à moins d'une dent de la denture de base, alors ce sont le ou les grains d'un second sous-ensemble qui viendra en position d'engagement complète, alors que les grains du premier sous-ensemble se retrouveront partiellement engagés ou dent sur dent.

Dans divers modes de réalisation de l'invention, on peut éventuellement avoir recours en outre à l'une et/ou à l'autre des dispositions suivantes.
Le moyeu de commande peut être rappelé à une position de repos par un ou plusieurs troisième(s) ressort(s). Ainsi, le moyeu de commande, et optionnellement la barre de liaison et la poignée de commande utilisateur, sont, en l'absence de sollicitation utilisateur, rappelés à une position de repos indépendamment de l'action des premiers et seconds ressorts ; ainsi le rappel des première et seconde cames peut être découplé des moyens de rappel du moyeu de commande, ce qui garantit le bon re-verrouillage des grains.
Selon une option avantageuse, les premiers, seconds et troisièmes ressorts peuvent être identiques, agencés dans le même plan à la même position axiale, et répartis autour de l'axe tous les 60°. Ceci permet d'optimiser la compacité axiale de l'articulation, car les trois fonctions de rappel sont logées dans un espace axial réduit.

On peut choisir **P=2,** la première série de grains peut avantageusement alors comprendre trois grains décalés à 120° les uns des autres ; de sorte que les points de verrouillage sont équitablement répartis autour de la denture de base et que la robustesse du verrouillage est adéquate pour répondre au cahier des charges de sécurité. Autrement dit, ceci revient à dédoubler la série de grains de verrouillage avec un décalage d'une demi-dent pour doubler le nombre de positions possibles. Ainsi on peut améliorer le confort de l'utilisateur du siège qui dispose d'un pas de réglage et d'ajustement plus fin.

De façon similaire, la seconde série de grains peut avantageusement comprendre trois grains décalés à 120° les uns des autres.

Les premiers et seconds grains peuvent avantageusement être agencés dans le même plan à la même position axiale, disposés de manière alternée tout autour de la denture de base; on obtient ainsi une compacité axiale équivalente à un système à une seule série de grains ;
Les premiers grains sont similaires aux seconds grains, excepté la denture des premiers grains qui est décalée d'une demi-dent par rapport à la denture des seconds grains ; ainsi le décalage est obtenu par une variation de denture des grains, alors que le second flasque peut former six guides similaires régulièrement disposés à 60° chacun.

On peut préférentiellement choisir **N** comme un multiple de 6. Moyennant quoi, on dispose sur la denture de base d'un motif répétitif tous les 60° ce qui simplifie la conception du deuxième flasque dans lequel les six guides sont identiques et régulièrement disposés à 60° chacun.

Selon une option avantageuse, chacune des première et deuxième cames de commande peut comprendre un corps principal annulaire et plusieurs pattes de poussée radiale, de préférence au nombre de trois, les pattes de poussée radiale des première et deuxième cames étant agencées dans le même plan à la même position axiale que les grains de verrouillage, alors que le corps principal annulaire de la première came est décalé axialement du corps principal annulaire de la seconde came. Ainsi on dispose les corps annulaires susmentionnés des cames l'un à la suite de l'autre selon la direction axiale, alors que toutes les pattes de poussée se trouvent à la même position axiale ; ce qui permet de loger astucieusement les deux cames de commande, qui restent indépendantes l'un de l'autre, dans un espace réduit.
Selon une option avantageuse, on trouve deux troisièmes ressorts, diamétralement opposés, deux seconds ressorts, disposés à 120 degrés l'un de l'autre, deux troisièmes ressorts disposés à 120 degrés l'un de l'autre, les six ressorts étant disposés dans six cuvettes similaires formées dans le second flasque et régulièrement espacées autour de l'axe. Moyennant quoi on simplifie le procédé d'obtention du second flasque dans lequel on forme six cuvettes similaires pour loger des ressorts indépendamment de leur destination.
Selon une autre réalisation, on peut choisir **P=5** sous-ensembles comprenant chacun un grain denté, les dentures de deux grains dentés consécutifs étant séparées par un écart angulaire de 72 degrés et N n'étant pas multiple de 5. De sorte que l'on peut obtenir un pas de réglage cinq fois plus petit que le pas de la denture de base. Avantageusement, les cames de commande sont des coins métalliques guidés selon un mouvement tangentiel et repoussés par des ressorts de compression hélicoïdaux ; ce qui forme une solution compacte pour les cames de commande ;
Avantageusement, les coins métalliques sont agencés dans un même plan à une même position axiale, les ressorts de compression hélicoïdaux étant aussi de préférence agencés dans le même plan. Moyennant quoi, l'encombrement d'une telle articulation peut être similaire aux articulations de l'art antérieur.
Avantageusement, le moyeu de commande peut être une plaque de commande plastique comprenant des ergots saillants axialement et configurés pour repousser les coins lorsque la plaque de commande tourne vers la une position de déverrouillage ; ainsi le moyeu de commande est fait d'une seule pièce cinq moulée en plastique.

Selon une autre réalisation, on peut choisir **P=3** sous-ensembles comprenant chacun deux grains dentés. On peut ainsi obtenir une division par trois du pas de verrouillage par rapport au pas de la denture de base, tout en ayant deux grains dentés complètement engagés.

Selon une option avantageuse, chacune des première et deuxième cames de commande comprend un ergot de rappel sur lequel vient porter l'extrémité libre du ressort de rappel correspondant et au moins une encoche d'entraînement prévue pour coopérer avec au moins un doigt du moyeu de commande. Ainsi les fonctions de commande et de rappel utilisent des formes intégrées dans chacune des cames de commande.
Selon une option avantageuse, les cames de commande sont métalliques et sont commandées par une plaque de commande plastique, ladite plaque de commande permettant de tirer les grains de verrouillage vers l'intérieur en agissant sur des pions saillant axialement de chacun des grains de verrouillage. On optimise ainsi les moyens de commande des grains dentés de verrouillage.

On peut prévoir un jeu angulaire (θ) entre la position de repos (α0) du moyeu de commande et la position d'attaque de chacune des cames de commande (α1, α2), ce jeu angulaire étant supérieur à 3°. La position de repos est ainsi bien séparée angulairement des positions d'attaque des premières et secondes cames.

Enfin, l'invention a également pour objet un siège de véhicule comportant une assise, un dossier et au moins une articulation telle que décrite ci-dessus.

La présente invention sera mieux comprise et d'autres caractéristiques et avantages apparaîtront encore à la lecture de la description détaillée qui suit comprenant des modes de réalisation donnés à titre illustratif en référence avec les figures annexées, présentés à titre d'exemples non limitatifs, qui pourront servir à compléter la compréhension de la présente invention et l'exposé de sa réalisation et, le cas échéant, contribuer à sa définition, sur lesquelles :
- la figure 1 est une vue générale d'un siège de véhicule équipé d'une articulation selon l'invention,
- la figure 2 est une vue de face d'un dispositif de réglage angulaire utilisé dans le siège de la Figure 1 comprenant des première et deuxième articulations,
- la figure 3 représente en perspective une vue éclatée de la première articulation du dispositif de la Figure 2, selon un premier mode de réalisation,
- la figure 4 est une vue en coupe axiale de l'articulation, selon le premier mode de réalisation,
- la figure 5 représente plus en détail et en perspective les deux séries de grains de verrouillage, les deux cames de commande, les différents ressorts de rappel, selon le premier mode de réalisation,
- la figure 6 représente en perspective une plaque de commande associée au moyeu de commande, selon le premier mode de réalisation,
- la figure 7 est une vue en coupe transversale partielle de l'articulation en position verrouillée, selon la ligne de coupe VII-VII de la figure 4,
- la figure 8 est une vue en coupe transversale partielle de l'articulation en position verrouillée par la deuxième série de grains de verrouillage, selon la ligne de coupe VIII-VIII de la figure 4,
- la figure 9 est une vue en coupe transversale partielle de l'articulation en position verrouillée par la deuxième série de grains de verrouillage, selon la ligne de coupe IX-IX de la figure 4,
- la figure 9A est une vue plus en détail d'une partie de la figure 9, toujours selon le premier mode de réalisation,
- la figure 10 est une vue en coupe transversale partielle de l'articulation en position déverrouillée, toujours selon le premier mode de réalisation,
- la figure 11 représente le second flasque d'articulation toujours selon le premier mode de réalisation,
- les figures 12 à 15 représentent un second mode de réalisation, la figure 12 représente une vue en perspective partielle de l'articulation, la figure 13 est une vue en coupe axiale de l'articulation, la figure 14 représente une autre vue en perspective partielle de l'articulation et la figure 15 représente la plaque de commande vue en perspective.

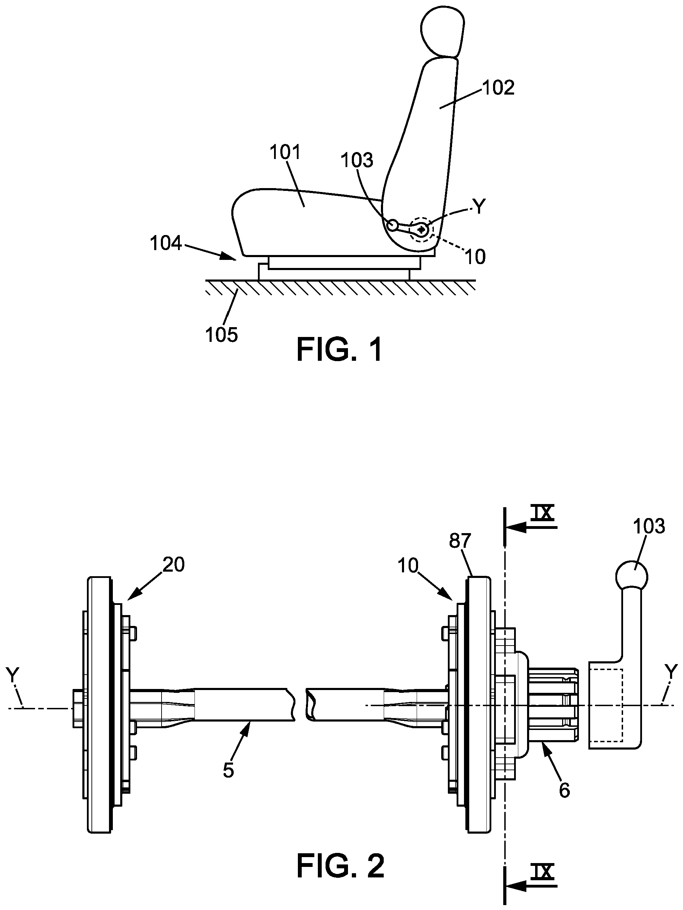

La figure 1 montre un siège de véhicule automobile **100** comportant un dossier **102** qui est monté pivotant sur une assise **101** autour d'un axe de pivotement horizontal transversal **Y**, aussi appelé axe d'articulation, l'assise **101** étant montée sur le plancher du véhicule **105** le cas échéant par l'intermédiaire de glissières longitudinales **104.** De plus, dans la zone du mécanisme d'articulation, il est prévu une poignée de commande **103** qui permet à un utilisateur d'ajuster la position angulaire du dossier par rapport à l'assise.

Le pivotement du dossier **102** est possible grâce à un dispositif de réglage angulaire, représenté sur la figure 2, comprenant une première articulation **10**, du côté gauche du siège, et une deuxième articulation **20**, optionnelle selon l'invention, du côté droit du siège, actionnables de façon synchronisée par la poignée de commande 103 située côté gauche ou tout autre dispositif d'actionnement (par exemple une commande de type 'easy entry' pour l'accès aux places arrières d'un véhicule 3 portes).

Ces première et deuxième articulations **10**, **20,** sont adaptées pour bloquer le pivotement du dossier **102** par rapport à l'assise **101** en situation d'utilisation normale, et sont aussi adaptées pour autoriser un mouvement de rotation du dossier lorsque l'utilisateur sollicite la poignée de commande **103.**

Il est à noter que la première articulation **10** et le cas échéant la deuxième articulation **20** peuvent être utilisées pour relier un quelconque élément de siège à un autre élément de siège et pas nécessairement l'assise et le dossier. On note ici que les figures 1 et 2 sont communes aux deux modes de réalisation illustrés dans les figures qui suivent.

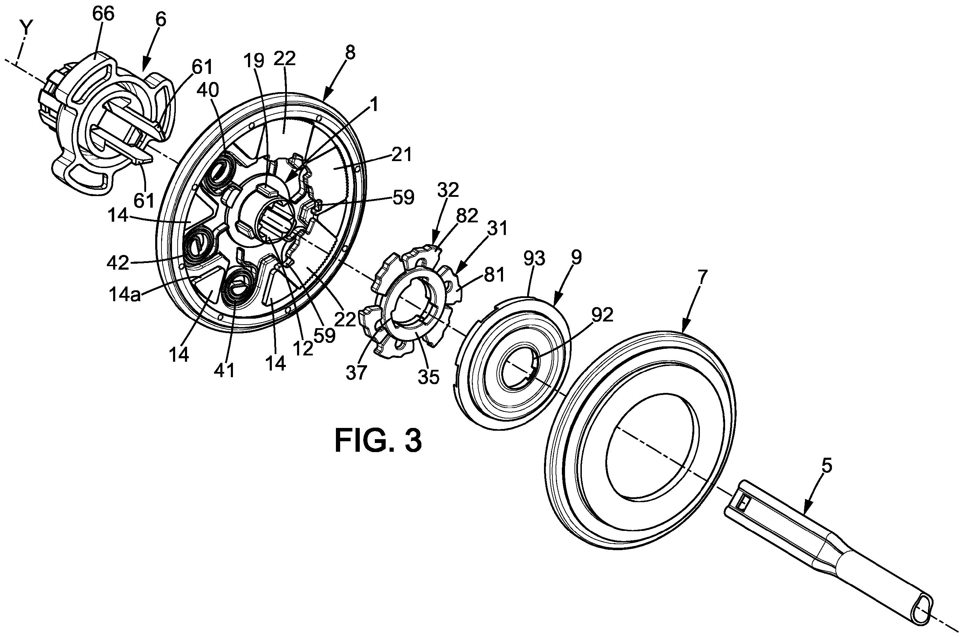

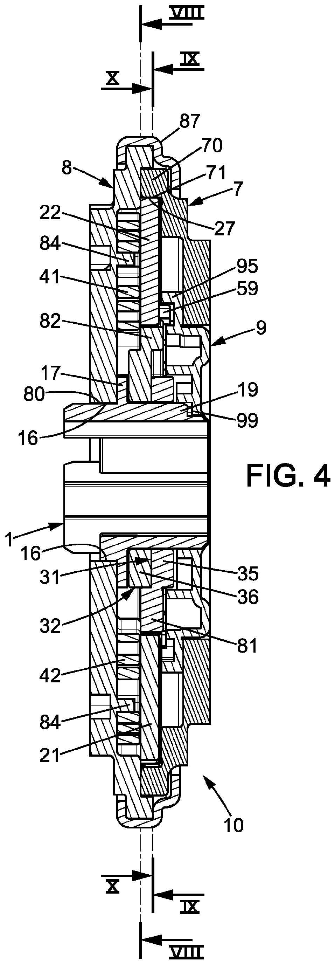

Comme représenté sur les figures 3 à 9, concernant le premier mode de réalisation, la première articulation **10** comprend tout d'abord des premier et deuxième flasques métalliques **7**, **8** fixés respectivement à l'armature structurelle de l'assise et à l'armature structurelle du dossier (le contraire étant bien entendu possible). Ces deux flasques 7, 8 présentent une forme générale de disque et sont reliés entre eux par une couronne extérieure métallique sertie **87** en délimitant ainsi un espace intérieur qui contient un dispositif de verrouillage qui va être détaillé plus loin.

Par pure convention, on appelle parfois le premier flasque **7** le flasque 'mobile', et on appelle le second flasque **8** le flasque 'fixe' ; toutefois, le premier flasque peut être relié solidairement soit au dossier soit à l'assise, et le second flasque relié solidairement inversement soit à l'assise soit au dossier.

Le dispositif de verrouillage comprend plusieurs grains de verrouillage **21, 22** métalliques déplaçables dotés chacun d'une denture extérieure **27, 28** en arc de cercle et d'un pion de manoeuvre **59.**

Le premier flasque **7** comporte une zone annulaire périphérique, appelée aussi bordure **70,** présentant une surface dentée **71,** orientée radialement vers l'intérieur et située en vis-à-vis des dentures extérieures **27, 28** des éléments de verrouillage **21, 22.** Cette surface dentée **71** est circulaire et est appelée 'denture de base' dans le présent document.

La denture de base comprend N dents régulièrement espacées d'un pas angulaire de 360/N degrés. De préférence, on choisira choisit **N** comme un multiple de 6, de manière à avoir une répétition de motif sur la denture de base tous les 60°. Dans l'exemple illustré, N vaut 192, mais N pourrait être différent, par exemple 186, 180, 174, 168, ou 198 ou autre.

Avantageusement, on prévoit deux séries de grains de verrouillage (aussi appelés 'éléments' de verrouillage), une première série de premiers grains repérés **21** et une seconde série de seconds grains repérés **22.** Plus généralement, on définit un ensemble de **P** sous-ensembles de grains dentés, chaque sous-ensemble comprenant un ou plusieurs grains dentés, la notion de sous-ensemble correspondant à la possibilité pour tous les grains dentés de ce sous-ensemble d'être engagés en même temps dans la denture de base. Ici en l'occurrence dans ce premier mode de réalisation, nous avons **P=2,** et trois grains dentés dans chacun des deux sous-ensembles. Le premier sous-ensemble comprend trois premiers grains le second sous-ensemble comprend trois seconds grains.

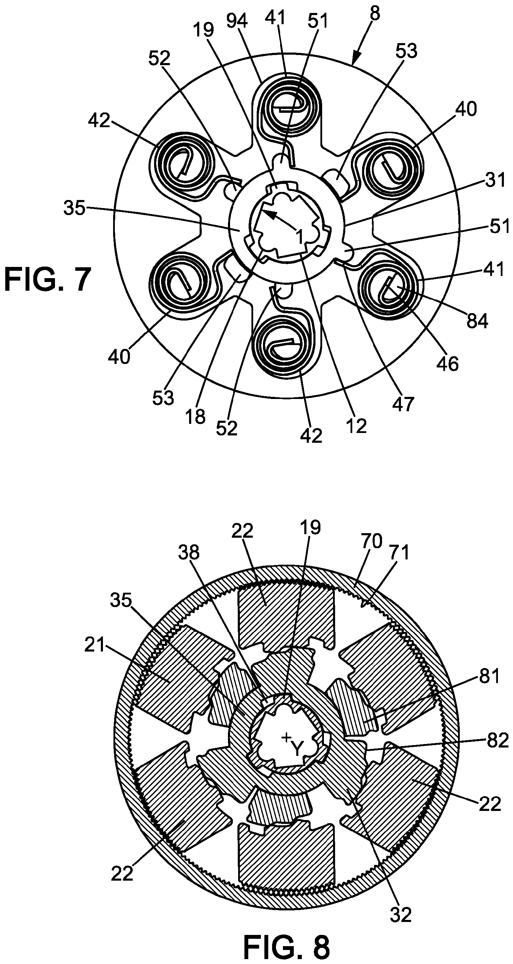

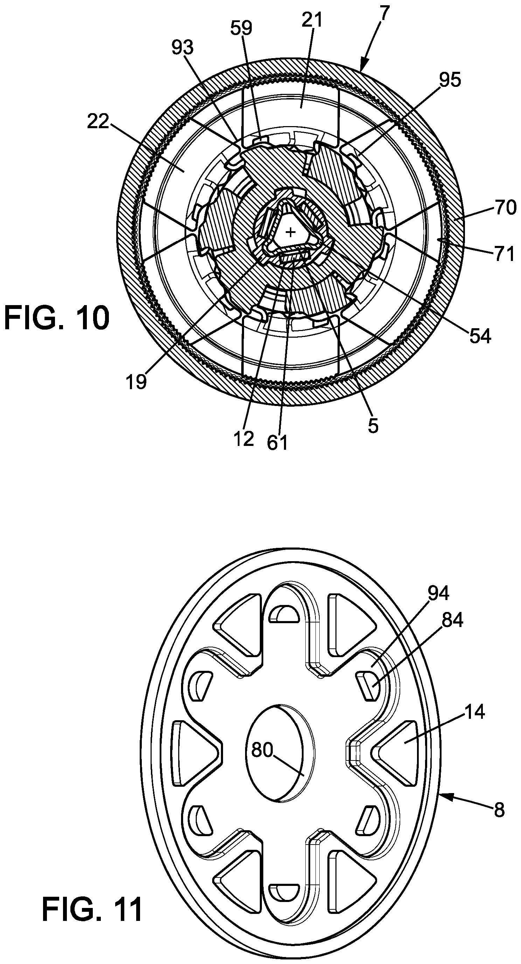

Chaque grain de verrouillage **21,22** est déplaçable radialement dans des guides **14** appartenant au second flasque **8,** entre une position engagée où la denture **27, 28** du grain de verrouillage vient en prise avec la denture de base **71** susmentionnée (grains 22, figure 8) et une position désengagée (figure 10) où le grain de verrouillage 21, 22 est déplacé radialement vers l'intérieur de façon que sa denture **27, 28** ne coopère pas avec la denture de base 71, et libère ainsi la rotation du deuxième flasque 8 par rapport au premier flasque 7. Dans l'exemple, les guides 14 encadrent les grains et définissent une translation purement radiale grâce à leurs bords **14a** mais il n'est pas exclu d'avoir une inclinaison du guidage par rapport à la direction radiale.

La première articulation 10 comprend de plus un moyeu de commande **1** monté pivotant autour de l'axe Y et adapté pour provoquer le déplacement des grains de verrouillage **21,22** entre leur position engagée et leur position désengagée.

Ce moyeu de commande 1 est associé solidairement à une plaque de commande **9** (aussi appelé 'masque de commande') et coopère avec deux cames de commande **31, 32** comme il sera détaillé ci-après.

La première came de commande **31** coopère avec les premiers grains de verrouillage **21** au moyen de pattes de poussée radiale **81** qui forment rampe sur leur bordure périphérique extérieure pour pousser les grains en engagement vers l'extérieur.

Dans l'exemple illustré, il y a trois premiers grains de verrouillage **21** disposés à 120° les uns des autres, et il y a aussi trois pattes de poussée radiale **81** en vis-à-vis dans la première came de commande 31.

De façon analogue, la deuxième came de commande **32** coopère avec les seconds grains de verrouillage **22** au moyen de pattes de poussée radiale **82** qui forment rampe sur leur bordure périphérique extérieure.

Dans l'exemple illustré, il y a trois seconds grains de verrouillage **22** disposés à 120° les uns des autres, décalés de 60° vis-à-vis des premiers grains de verrouillage 21, et il y a aussi trois pattes de poussée radiale **82** en vis-à-vis dans la seconde came de commande 32.

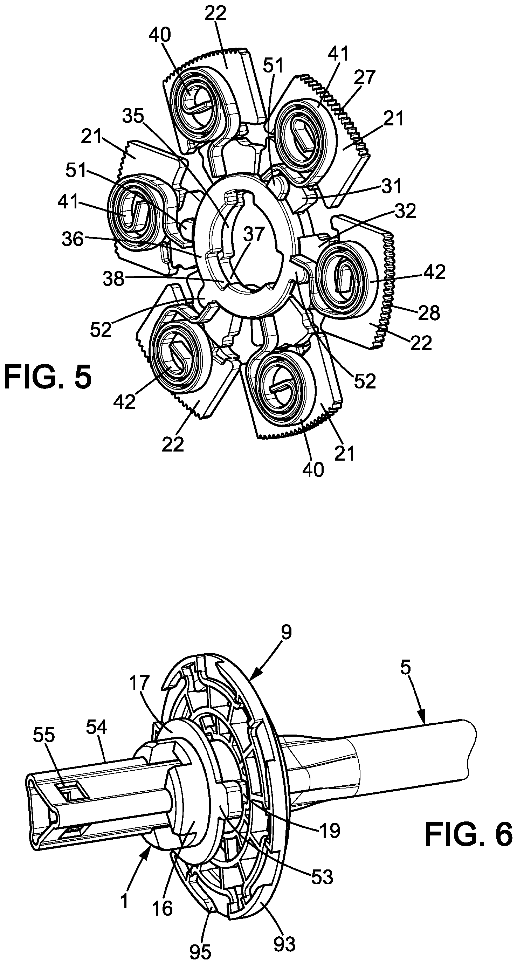

De façon avantageuse, les trois premiers grains de verrouillage 21 et les trois seconds grains de verrouillage 22 sont agencés dans le même plan à la même position axiale, disposés de manière alternée tout autour de la denture de base (figure 5), soit un grain tous les 60°.

Les trois premiers grains de verrouillage 21 sont identiques entre eux et possèdent une denture repérée **27,** les trois seconds grains 22 sont identiques entre eux et possèdent une denture repérée **28.**

Avantageusement, les dentures 27 de la première série de grains sont décalées angulairement autour de l'axe par rapport aux dentures 28 de la seconde série de grains, d'un écart **(K+0,5)360/N**, K étant entier, autrement dit d'un décalage d'une demi-dent. Ainsi, la première série de grains et la seconde série de grains ne peuvent pas être engagées en même temps, ce sera une ou l'autre.

Il faut noter ici que le décalage d'une demi-dent pourrait être obtenu en solution alternative par un léger décalage (1/2 dent) des trois guides **14** guidant les seconds grains par rapport aux trois guides guidant les premiers grains, et ceci avec des grains strictement identiques.

La première came de commande **31** est rappelée vers une position, dite de verrouillage, qui provoque par effet de came l'engagement de la denture **27** des premiers grains dans la denture de base **71**, ce rappel étant assuré par deux premiers ressorts **41** agencés dans des cuvettes **94** du second flasque **8.**

De façon analogue, la deuxième came de commande **32** est rappelée vers une position de verrouillage, qui provoque par effet de came l'engagement de la denture **28** des seconds grains dans la denture de base **71**, ce rappel étant assuré par deux seconds ressorts **42** agencés dans deux autres cuvettes **94** du second flasque. Il faut remarquer que le rappel des première et deuxième cames est assuré de façon indépendante par les premiers et seconds ressorts **41**, **42** susmentionnés.

La première came de commande 31 est une pièce métallique estampée, et comprend un corps principal annulaire **35** depuis lequel s'étendent radialement les pattes de poussée radiale **81** déjà mentionnées, deux ergots de rappel **51** s'étendant axialement depuis la base des deux pattes de poussée radiale, et une encoche d'entraînement **37** formée sur la face radialement intérieure du corps principal.

De façon similaire, la seconde came de commande 32 est une pièce métallique estampée, et comprend un corps principal annulaire **36** depuis lequel s'étendent radialement les pattes de poussée radiale **82** déjà mentionnées, deux ergots de rappel **52** s'étendant axialement depuis la base des deux pattes de poussée radiale **82**, et une encoche d'entraînement **38** formée sur la face radialement intérieure du corps principal.

Le moyeu de commande **1**, en matière plastique, comprend une portée cylindrique **16** reçue dans un palier **80** du second flasque, une collerette **17**, trois murets d'entraînement **19** pour entraîner les deux cames et le plaque de commande ; par ailleurs, on dispose deux ergots de rappel **53** diamétralement opposés qui s'étendent vers l'extérieur à partir de la collerette mais qui sont plus épais ; Le moyeu de commande **1** est sollicité élastiquement par deux troisièmes ressorts **40** vers une position de repos aussi appelée position neutre, ces troisièmes ressorts venant appuyer sur les ergots de rappel **53** susmentionnés.

Comme illustré à la figure 5, les premiers, seconds et troisièmes ressorts **41**, **42**, **40** sont de préférence identiques, agencés dans le même plan à la même position axiale, et répartis autour de l'axe tous les 60°.

Chaque ressort se présente comme un ressort spiral et comprend d'une part une première extrémité **46** formant ancrage sur un pion semi-circulaire **84** du premier flasque, et d'autre part une seconde extrémité **47** en appui glissant respectivement sur soit un ergot **51** appartenant à la première came 31, soit un ergot **52** appartenant à la seconde came 32, soit un ergot **53** appartenant au moyeu de commande 1.

Dans l'exemple illustré, il y a 2 premiers ressorts **41**, mais il pourrait y en avoir un ou trois, de même il y a deux seconds ressorts **42** représentés mais il pourrait y en avoir un ou trois.

Chaque ressort est logé dans une cuvette individuelle **94.** Dans l'exemple illustré (Fig. 11) chaque cuvette est interposée entre deux guides **14** de grains venus de forme du second flasque 8.

Le moyeu de commande 1, aussi appelé 'moyeu interne' est complété par un moyeu externe **6.** Le moyeu de commande 1 peut être déplacé en rotation par l'actionnement de la poignée **103** via le moyeu externe **6** jusque dans une position de déverrouillage où la plaque de commande **9** entraine les grains de verrouillage **21,22** pour les déplacer radialement vers l'intérieur jusqu'en position déverrouillée (figure 10) .

La plaque de commande **9** est réalisée de préférence en matière plastique. Elle se présente comme un disque avec une ouverture axiale centrale **92**, avec des encoches d'entraînement **99** (recevant les murets 19 du moyeu interne 1) et des bordures périphériques **93** avec des formes de rampe **95**, adaptées pour coopérer par effet de came avec les pions de manoeuvre **59** des grains de verrouillage 21, 22 (Fig 10) .

Comme illustré aux figures 2, 3, on prévoit une barre de liaison 5, optionnelle, de préférence métallique, reliant les deux articulations 10, 20 (voir plus loin).

Une fois l'assemblage réalisé, les trois pièces que sont le moyeu interne **1**, le moyeu externe **6**, et la barre de liaison **5** forment un tout solidaire appelé ici 'arbre de commande', immobilisé le long de la direction axiale grâce à l'emprisonnement du moyeu interne dans d'articulation, mais avec un degré de liberté angulaire par rapport aux premières et deuxième cames de commande 31, 32.

Le moyeu de commande externe **6** comprend trois lobes **66** d'arrêt prévus pour coopérer avec des butées (non représentées) issues de l'armature reliée au second flasque. Le moyeu externe 6 comprend aussi des pattes de clipsage **61** flexibles qui s'étendent dans la direction axiale Y, et qui sont prévues pour venir se clipser dans des rainures **12** de forme rectangle ménagées dans l'orifice central du moyeu interne 1.

Il est important de remarquer, bien que ce cas ne soit pas représenté sur les figures, qu'une seule articulation 10 peut être utilisée pour la mise en oeuvre de la présente invention, sans barre de liaison proprement dite.

Lorsque, comme représenté, la barre de liaison 5 comprend un tube cylindrique centré sur Y avec des extrémités trilobées à chaque bout, chaque lobe **54** étant prévu pour venir se loger dans un logement concave **18** du moyeu interne 1, notamment pour assurer l'entraînement en rotation.

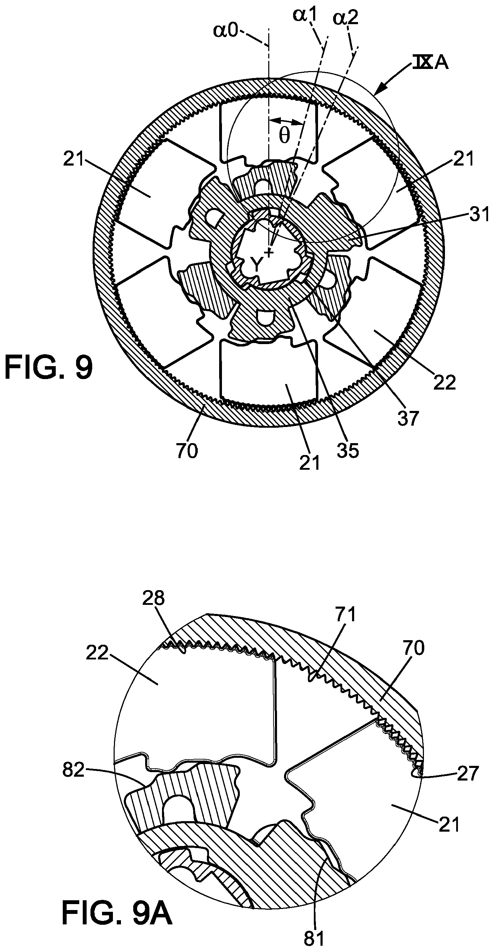

En référence aux figures, le fonctionnement de l'articulation est maintenant décrit. Au repos, l'arbre de commande est à la position dite de repos notée **α0** (Fig. 9), sans aucune action sur les cames de commande, en raison de la présence du jeu angulaire **θ** (course 'morte'). Lorsque l'utilisateur actionne la poignée 103 (dans l'exemple illustré dans le sens des aiguilles d'une montre), l'arbre de commande tourne jusqu'à la position **α1** (position d'attaque) où il vient contacter en premier la came de commande (première ou seconde) correspondant à la série de grains verrouillés.

Comme illustré de figure 8, les doits ou murets 19 d'entraînement du moyeu interne contactent alors le bord des encoches **38** de la seconde came pour faire tourner ladite came et libérer l'engagement des seconds grains. En poursuivant la rotation, le moyeu interne 1 attaque ensuite (position **α2**) la première came de commande 31 qui n'était pas rappelée complètement à la position de verrouillage (les premiers grains été dent sur dent). En parallèle, dans le même mouvement, sous l'effet des formes de rampe **95** de la plaque de commande **9**, les six grains de verrouillage 21,22 sont tirés radialement vers l'intérieur pour libérer parfaitement la rotation relative des premiers et seconds flasques 7, 8, c'est-à-dire le réglage de la position du dossier.

On remarque que l'effort résistant est progressif le long de la course angulaire ; dans la course morte seuls les troisièmes ressorts **40** s'opposent à la sollicitation de l'utilisateur, ils sont ensuite secondés par les seconds ressorts **42** sur la partie suivante de la course et enfin s'ajoute l'effort des premiers ressorts **41** lorsque les deux cames sont repoussées vers la position de déverrouillage (Fig 10).

La course morte **θ** est choisie typiquement entre 3° et 10°. Si la deuxième articulation **20** est présente, pour la deuxième partie de la course, à la fois les premiers, seconds et troisièmes ressorts s'opposent à l'effort exercé par l'utilisateur. Pour la deuxième articulation 20, la course morte **θ'** peut être légèrement différente de **θ**, mais il y a bien un un écart angulaire qui garantit que, l'arbre de commande étant rappelé à la position de repos, les deux articulations sont parfaitement verrouillées.

Lorsque l'utilisateur relâche la sollicitation sur l'arbre de commande, les premiers et deuxièmes ressorts de rappellent les cames vers leur position de verrouillage (sens trigonométrique dans l'exemple illustré) et par conséquent celles-ci ont tendance à pousser les grains de verrouillage vers la position d'engagement. Toutefois, comme déjà évoqué, seule l'une des séries de grains parmi les deux séries sera dans une position plus favorable pour l'engagement dans la denture de base **71.** Ainsi, la série de grains en position la plus favorable (la seconde dans l'exemple illustré) s'engage dans la denture de base, alors que l'autre série de grains va rester dans une position dent sur dent (Fig 9A). De plus, l'arbre de commande revient à sa position de repos sous l'effet des troisièmes ressorts 40, à distance des positions d'attaque des première et deuxième cames.

S'agissant de l'assemblage, le moyeu interne 1 est intégré à l'articulation elle-même et il est immobilisé axialement par la collerette **17** car pris en sandwich par l'empilage du premier flasque **7**, de la plaque de commande **9**, de la première came **31**, de la seconde came **32** et du second flasque **8**, le tout refermé par la couronne extérieure sertie **87.**

Pour assembler l'arbre de commande, on enfile la barre de commande **5** dans les évidements axiaux, puis, on vient clipser le moyeu externe **6.** Les languettes **61** munies de formes de crochets viennent se clipser sur le moyeu interne **1** (rainures 12), et d'autres formes de clipsage viennent se loger dans des orifices carrés **55** prévus en bout de la barre de commande **5.** En conséquence de quoi, on assemble l'arbre de commande manuellement sans outil.

De la sorte, il n'est pas besoin de prévoir une immobilisation axiale au niveau de la deuxième articulation 20 quand celle-ci est présente.

La deuxième articulation 20, peut être une image symétrique de la première articulation 10 par rapport à l'axe Y du côté opposé du siège, elle peut elle aussi contenir deux série de grains et deux cames de commande pour obtenir un pas de verrouillage égal à la moitié du pas de la denture de base.

Il faut remarquer que l'obtention d'un pas de verrouillage inférieur à 1° favorise le verrouillage simultané des articulations gauche à droite, et diminue le risque qu'une des deux articulations ne soit pas bien verrouillée en raison d'un léger décalage angulaire entre les articulations gauche et droite.

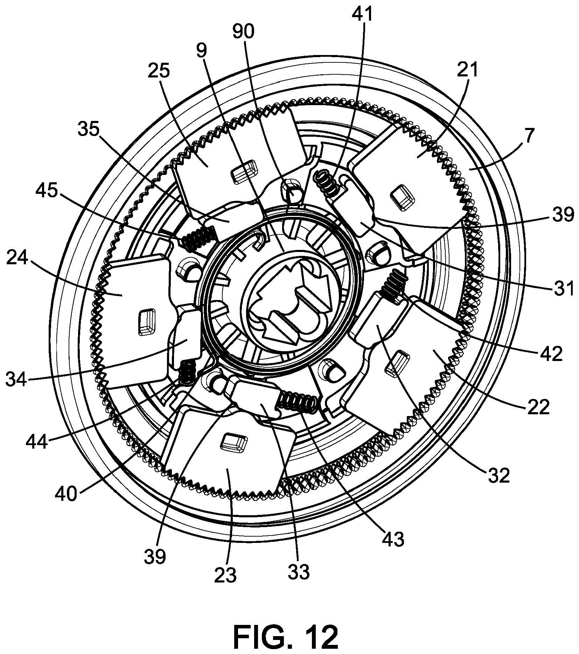

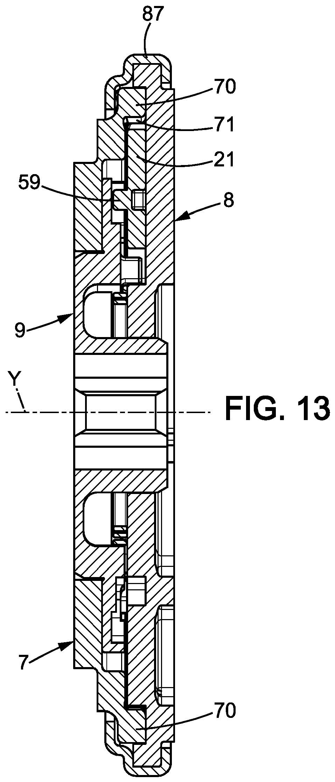

Comme illustré par le second mode de réalisation, on prévoit de diminuer encore plus le pas de réglage de l'articulation par rapport à un pas de base de la denture de base, comme ceci est illustré en particulier aux figures 12 à 15. Tous les éléments ou entités qui ne sont pas décrits en particulier à propos de ce second mode de réalisation seront considérés comme similaires ou identiques aux éléments déjà décrits pour le premier mode de réalisation.

Dans ce second mode de réalisation, nous avons cinq **(P=5)** sous-ensembles de grains, chaque sous-ensemble comprenant un seul grain de verrouillage, repérés respectivement **21, 22, 23, 24, 25.** Dans cette configuration, un seul grain est complètement engagé (le troisième repéré **23** dans le cas illustré Fig 12) alors que les autres sont partiellement engagés ou dans la configuration dent sur dent.

Les cames de commande sont formées par des coins métalliques guidés selon une direction tangentielle par des formes en creux 95 dans le second flasque 8 ; on note que les coins métalliques jouent ici le rôle des cames de forme annulaire du premier mode de réalisation, mais ici on trouve une came de commande individuelle pour chacun des grains de verrouillage. La première came 31 agit sur le premier grain 21, et de manière analogue les autres cames de commande 32-35 agissent respectivement individuellement sur les autres grains 22-25 (Fig 12).

Plus précisément, dans l'exemple illustré les cames ont une forme générale extérieure parallélépipédique, avec un pan coupé **39** qui fait office de forme de came ou de coin.

Chaque coin métallique **31-35** est rappelé indépendant par un ressort individuel **41-45;** dans l'exemple illustré, il s'agit d'un ressort travaillant en compression qui s'appuie d'une part dans le fond **86** d'un logement **85** et d'autre part sur l'arrière **30b** du coin métallique.

Dans l'exemple illustré, les ressorts de rappel **41-45** sont de petits ressorts hélicoïdaux travaillant compression et poussant de façon rectiligne dans une direction tangentielle les coins de verrouillage.

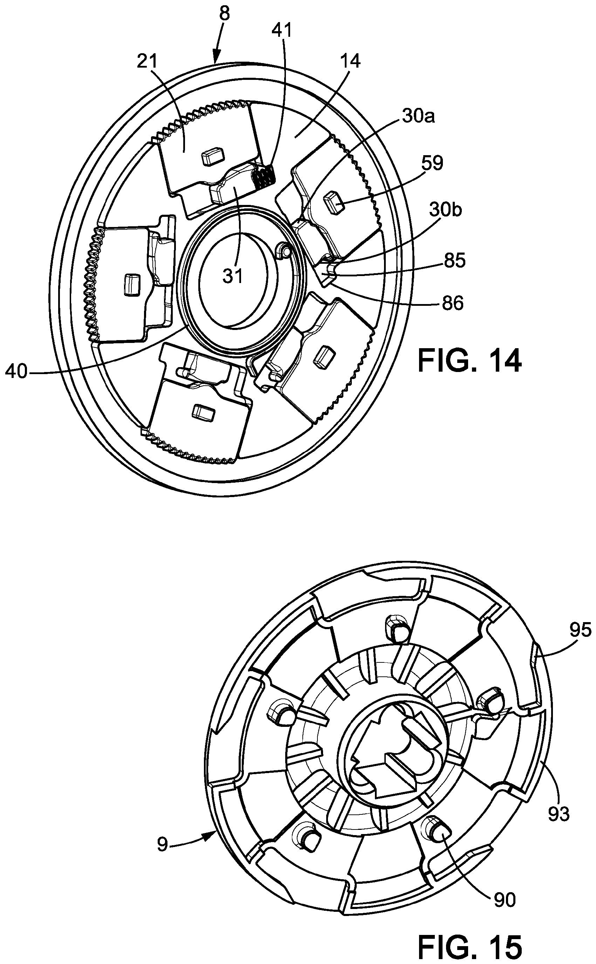

Sur la figure 14, seul le premier ressort de rappel 41 est représenté, les autres ressorts de rappel 42-45 des cames de verrouillage ne sont pas représentés par souci de clarté.

Le moyeu de commande 1 est formé simplement par la plaque de commande **9** en matière plastique laquelle présente des ergots saillant axialement 90, chacun de ces ergots étant adapté pour pousser respectivement chacun des coins de verrouillage à l'encontre de son ressort de rappel. Plus précisément, l'ergot 90 vient porter sur la face frontale avant **30a** du coin.

Dans l'exemple illustré, les dentures de deux grains dentés consécutifs sont séparées par un écart angulaire de 72 degrés, et la denture de base **71** comporte **N** dents, N n'étant pas un multiple de cinq par exemple 192 ou encore tout autres valeur dans les plages 151-154, 156-159, 161-164, 166-169, etc.

De préférence on choisit pour **N** un multiple de cinq plus ou moins 1, par exemple 189 ou 186 dents, pour obtenir ainsi un pas de réglage possible équivalent à une division par cinq du pas de la denture de base.

On remarque que les logements **86** pour le guidage des cames de verrouillage **31-35** sont obtenus directement de forme dans le second flasque **8** de l'articulation, dans le même plan que les guides **14** qui encadrent le mouvement des grains de verrouillage 21-25.

S'agissant du fonctionnement d'une telle articulation selon le second mode de réalisation, on comprend que en partant d'une position où un des grain est engagé et que l'on sollicite la poignée 103 pour modifier le réglage angulaire du dossier, tous les grains sont rappelés vers l'intérieur par la rotation de la plaque de commande **9** et l'effet de came des rampes **95** qui tirent les grains via leurs pions de manoeuvre **59**, puis que l'utilisateur relâche la poignée, alors le verrouillage est obtenu par l'engagement de un grain parmi les cinq, pas nécessairement un grain adjacent au grain précédemment engagé, généralement celui qui est le plus proche angulairement d'une position d'engagement complète.

Bien entendu, le nombre **P** de sous-ensembles pourrait valoir 3 ou 4. On pourrait par exemple avoir trois sous-ensembles (**P=3**) de chacun deux grains dentés diamétralement disposés qui peuvent être engagés simultanément dans la denture de base.

On peut ainsi exprimer de façon généralisée la caractéristique du décalage angulaire des dentures des grains dentés la formulation suivante : les dentures (27) du ou des premier(s) grain(s) sont décalées angulairement autour de l'axe par rapport aux dentures (28) du ou des second(s) grain(s), d'un écart sensiblement égal à **(K + 1/P) 360/N** degrés, K étant entier, N étant le nombre de dents de la denture de base 71 et **P** étant le nombre de sous-ensembles de grains dentés.

En définitive, le nombre **P** de sous-ensembles peut avantageusement prendre une valeur comprise entre 2 et 6.

Dans le cas où **P=2,** chaque sous-ensemble peut comprendre soit un seul grain denté, soit deux grains dentés, soit trois grains dentés comme illustré au premier mode de réalisation, soit encore quatre grains dentés.

Dans le cas où **P=3,** chaque sous-ensemble peut comprendre soit un seul grain denté, soit deux grains dentés

Dans le cas où **P=4,** chaque sous-ensemble peut comprendre soit un seul grain denté, soit deux grains dentés.

Dans le cas où **P=5,** chaque sous-ensemble comprendra un seul grain denté comme illustré au second mode de réalisation.

Dans le cas où **P=6,** chaque sous-ensemble comprendra un seul grain denté.

Lorsque le sous-ensemble contient un nombre pair de grains dentés, ces derniers seront de préférence disposés diamétralement opposés deux à deux.

## Revendications

1. **Articulation** (10) de siège de véhicule automobile permettant un réglage angulaire d'un dossier de siège (102) par rapport à une assise de siège (101) autour d'un axe (Y) d'articulation, l'articulation comprenant :
- des **premier et deuxième flasques** d'articulation (7,8) destinés à être liés solidairement respectivement auxdits dossier et assise du siège, le premier flasque (7) comprenant une denture de base (71) sur une bordure (70) dirigée radialement vers l'intérieur, avec N dents régulièrement espacées d'un pas angulaire de 360/N degrés,
- un ensemble de **P sous-ensembles de grains** dentés dont au moins :
- un premier sous-ensemble d'un ou plusieurs premier grain (21) coopérant avec une première came de commande (31) rappelée par un ou plusieurs premiers ressorts (41),
- un second sous-ensemble d'un ou plusieurs second grain (22) coopérant avec une seconde came de commande (32) rappelée par un ou plusieurs seconds ressorts (42),
les premier et second grains étant déplaçables au moins radialement, guidés par des guides formés dans le second flasque et comprenant des dents pour venir en engagement avec la denture de base (71), les premier et second grains étant déplaçables entre une position d'engagement où les dents des grains sont engagées dans la denture de base en vis-à-vis, et une position de dégagement dans laquelle il n'y a pas d'engagement mutuel des dents,
- un moyeu de commande (1) apte à déplacer les première et seconde cames de commande vers une position de déverrouillage, alors que les premiers et seconds ressorts sollicitent indépendamment les première et seconde cames (31, 32) vers une position de verrouillage,
dans lequel les dentures (27) du ou des premier(s) grain(s) sont décalées angulairement autour de l'axe par rapport aux dentures (28) du ou des second(s) grain(s), d'un écart sensiblement égal à (K + 1/P) 360/N degrés, K étant entier.

2. Articulation selon la revendication 1, dans laquelle le moyeu de commande (1) est rappelé à une position de repos par un ou plusieurs troisièmes ressorts (40).

3. Articulation selon l'une des revendications 1 à 2, dans laquelle **P=2,** le premier sous-ensemble de premiers grains (21) comprend trois grains décalés à 120° les uns des autres, et le second sous-ensemble de seconds grains (22) comprend trois grains décalés à 120° les uns des autres.

4. Articulation selon la revendication 3, dans laquelle les premiers et seconds grains sont agencés dans le même plan à la même position axiale, disposés de manière alternée tout autour de la denture de base.

5. Articulation selon l'une des revendications 3 à 4, dans laquelle les premiers grains (21) sont similaires aux seconds grains (22), excepté la denture (27) des premiers grains qui est décalée d'une demi-dent par rapport à la denture des seconds grains (28).

6. Articulation selon l'une des revendications 3 à 5, dans lequel on choisit N comme un multiple de 6.

7. Articulation selon l'une des revendications 3 à 6, dans laquelle chacune des première et deuxième cames de commande est montée à rotation autour de l'axe d'articulation (Y) et comprend un corps principal annulaire (35,36) et plusieurs pattes de poussée radiale (81,82), de préférence au nombre de trois, les pattes de poussée radiale des première et deuxième cames étant agencées dans le même plan à la même position axiale que les grains de verrouillage, alors que le corps principal annulaire (35) de la première came est décalé axialement du corps principal annulaire (36) de la seconde came.

8. Articulation selon la revendication 1, dans laquelle on trouve **P=5** sous-ensembles comprenant chacun un grain denté, les dentures de deux grains dentés consécutifs étant décalées l'une de l'autre par un écart angulaire de 72 degrés et N n'étant pas multiple de 5.

9. Articulation selon la revendication 8, dans laquelle les cames de commande sont des coins métalliques (31,32) guidés selon un mouvement tangentiel et repoussés par des ressorts de compression hélicoïdaux (41,42).

10. Articulation selon la revendication 9, dans laquelle les coins métalliques sont agencés dans un même plan à une même position axiale, les ressorts de compression hélicoïdaux étant aussi de préférence agencés dans le même plan.

11. Articulation selon la revendication 9, dans laquelle le moyeu de commande (1) est une plaque de commande (9) plastique comprenant des ergots (90) saillants axialement et configurés pour repousser les coins lorsque la plaque de commande tourne vers la une position de déverrouillage.

12. Articulation selon la revendication 1, dans laquelle on trouve **P=3** sous-ensembles comprenant chacun deux grains dentés.

13. Articulation selon l'une des revendications 1 à 12, dans laquelle on prévoit un jeu angulaire (θ) entre la position de repos (α0) du moyeu de commande et la position d'attaque de chacune des cames de commande (α1, α2), ce jeu angulaire étant supérieur à 3°.

14. **Siège** de véhicule comportant au moins une articulation (10) selon l'une quelconque des revendications 1 à 13.

## Patentansprüche

1. Kraftfahrzeugsitzverstellung (10), die eine winkelmäßige Einstellung einer Sitzlehne (102) mit Bezug auf ein Sitzkissen (101) bezüglich einer Verstellungsachse (Y) ermöglicht, wobei die Verstellung umfasst:
- erste und zweite Verstellungsflansche (7,8) dazu bestimmt jeweils fest verbunden zu werden/sein mit der Lehne und dem Kissen des Sitzes, wobei der erste Flansch (7) eine Basiszahnung (71) an einem Rand (70) radial nach innen gerichtet, mit N Zähnen, regelmäßig beabstandet um eine eine Winkelaufteilung von 360/N Grad, umfasst,
- eine Anordnung von P Unter-Anordnungen von Zahnkörpern, von denen zumindest:
- eine erste Unter-Anordnung von einem oder mehreren ersten Körpern (21) wechselwirkt mit einem ersten Steuernocken (31) vorgespannt durch eine oder mehrere erste Federn (41),
- eine zweite Unter-Anordnung von einem oder mehreren Körpern (22), wechselwirkend mit einem zweiten Steuernocken (32) vorgespannt durch eine oder mehrere zweite Federn (42),
wobei die ersten und zweiten Körper zumindest radialwärts versetzbar sind, geführt durch Führungen, ausgebildet in dem zweiten Flansch und umfassend Zähne, um in Eingriff zu gelangen bezüglich der Basiszahnung (71), wobei die ersten und zweiten Körper versetzbar sind zwischen einer Eingriffsposition, in welcher die Zähne der Körper in Eingriff sind in die Basiszahnung in Gegenüberstellung und einer Ausrückposition, in welcher kein wechselseitiger Eingriff der Zähne besteht,
- eine Steuernabe (1), fähig zur Versetzung der ersten und zweiten Steuernocken hin zu einer Entriegelungsposition, wohingegen die ersten und zweiten Federn unabhängig die ersten und zweiten Nocken (31, 32) hin zu einer Verriegelungsposition beaufschlagen,
wobei die Zahnungen (27) des oder der ersten Körper winkelmäßig versetzt sind herum um die Achse mit Bezug auf die Zahnungen (28) des oder der zweiten Körper um einen Abstand im Wesentlichen gleich zu (K + 1/P) 360/N Grad, wobei K eine Ganzzahl ist.

2. Verstellung nach Anspruch 1, bei welchem die Steuernabe (1) vorgespannt ist zu einer Ruheposition durch eine oder mehrere dritte Federn (40).

3. Verstellung nach einem der Ansprüche 1 bis 2, bei welcher P=2 gilt, wobei die erste Unteranordnung von ersten Körpern (21) drei um 120° mit Bezug zueinander versetzte Körper umfasst, und die zweite Unteranordnung von zweiten Körpern (22) drei um 120° mit Bezug zueinander versetzte Körper umfasst.

4. Verstellung nach Anspruch 3, bei welcher die ersten und zweiten Körper ausgebildet sind in derselben Ebene bei derselben Axialposition, angeordnet abwechselnd herum um die gesamte Basiszahnung.

5. Verstellung nach einem der Ansprüche 3 bis 4, bei welcher die ersten Körper (21) ähnlich sind zu den zweiten Körpern (22), mit Ausnahme der Zahnung (27) der ersten Körper, die versetzt ist um einen halben Zahn mit Bezug auf die Zahnung der zweiten Körper (28).

6. Verstellung nach einem der Ansprüche 3 bis 5 bei welcher N gewählt ist/wird als ein Vielfaches von 6.

7. Verstellung nach einem der Ansprüche 3 bis 6, bei welcher jede der ersten und zweiten Steuernocken drehbar montiert ist herum um die Verstellungsachse (Y) und einen ringförmigen Hauptkörper (35,36) umfasst, sowie mehrere Radial-Schub-Laschen (81, 82), vorteilhafter Weise bei einer Anzahl von drei vorgesehen, wobei die Radial-Schub-Laschen der ersten und zweiten Nocken ausgebildet sind in derselben Ebene, bei derselben Axialposition wie die Verriegelungskörper, wohingegen der ringförmige Hauptkörper (35) des ersten Nocken axialwärts versetzt ist von dem ringförmigen Hauptkörper (36) des zweiten Nocken.

8. Verstellung nach Anspruch 1, bei welcher man P=5 Unteranordnungen findet, umfassend jeweils einen Zahnkörper oder gezahnten Körper, wobei die Zahnungen von zwei aufeinanderfolgenden Zahnkörpern versetzt sind mit Bezug zueinander um einen winkelmäßigen Abstand von 72 Grad und N kein Vielfaches von 5 ist.

9. Verstellung nach Anspruch 8, bei welcher die Steuernocken Metallkeile (31, 32) sind, geführt entsprechend einer tangential Bewegung und vorgespannt durch Helicoidal-Kompressionsfedern (41, 42).

10. Verstellung nach Anspruch 9, bei welcher die metallischen Keile ausgestaltet sind in einer selben Ebene und einer selben Axialposition, wobei die Helicoidal-Kompressionsfedern ebenfalls vorteilhafter Weise ausgestaltet sind in derselben Ebene.

11. Verstellung nach Anspruch 9, bei welcher die Steuernabe (1) eine Kunststoffsteuerplakette (9) ist, umfassend Zapfen (90) die axialwärts vorspringend und ausgestaltet sind zum Vorspannen oder zurückschieben der Keile, wenn die Steuerplatte hin zu einer Entriegelungsposition dreht.

12. Verstellung nach Anspruch 1, bei welcher man P=3 Unteranordnungen findet, umfassend jeweils zwei gezahnte Körper oder Zahnkörper.

13. Verstellung nach einem der Ansprüche 1 bis 12, bei welcher man ein winkelmäßiges Spiel (θ) vorsieht zwischen der Ruheposition (α0) der Steuernabe und der Angriffsposition von jedem der Steuernocken (α1, α2), wobei das winkelmäßige Spiel größer ist als 3°.

14. Fahrzeugsitz umfassend, zumindest eine Verstellung (10) nach einem der vorangegangen Ansprüche 1 bis 13.

## Claims

1. **Hinge mechanism** (10) of a motor vehicle seat, allowing adjustment of the tilt of a seat backrest (102) relative to a seat cushion (101) about a hinge axis (Y), the hinge mechanism comprising:
- first and second hinge plates (7,8) intended to be rigidly connected to said backrest and seat cushion respectively, the first plate (7) comprising base gear teeth (71) on an edge (70) directed radially inward, having **N** teeth spaced regularly apart at an angular pitch of 360/N degrees,
- a set of **P** subsets of toothed elements, including at least:
- a first subset of one or more first elements (21) cooperating with a first control cam (31) biased by one or more first springs (41),
- a second subset of one or more second elements (22) cooperating with a second control cam (32) biased by one or more second springs (42),
the first and second elements being movable at least radially, guided by guides formed in the second plate and comprising teeth for engaging with the base gear teeth (71), the first and second elements being movable between an engaged position where the teeth of the elements are engaged with the facing base gear teeth, and a disengaged position where there is no mutual engagement of the teeth,
- a control hub (1) adapted to move the first and second control cams toward an unlocking position, while the first and second springs independently bias the first and second cams (31,32) toward a locking position,
wherein the teeth (27) of the first element(s) are offset angularly about the axis, relative to the teeth (28) of the second element(s), by an offset substantially equal to (K + 1/P) 360/N degrees, where K is an integer.

2. Hinge mechanism according to claim 1, wherein the control hub (1) is biased toward a rest position by one or more third springs (40).

3. Hinge mechanism according to one of claims 1 to 2, wherein **P=2,** the first subset of first elements (21) comprises three elements spaced 120° apart from one another, and the second subset of second elements (22) comprises three elements spaced 120° apart from one another.

4. Hinge mechanism according to claim 3, wherein the first and second elements are arranged in the same plane at the same axial position, such that they alternate along the base gear teeth.

5. Hinge mechanism according to one of claims 3 to 4, wherein the first elements (21) are similar to the second elements (22), except for the teeth (27) of the first elements which are offset by a half-tooth relative to the teeth of the second elements (28).

6. Hinge mechanism according to one of claims 3 to 5, wherein N is chosen as a multiple of 6.

7. Hinge mechanism according to one of claims 3 to 6, wherein each of the first and second control cams is mounted so as to rotate about the hinge axis (Y) and comprises an annular main body (35,36) and a plurality of radial push tabs (81,82), preferably three in number, the radial push tabs of the first and second cams being arranged in the same plane at the same axial position as the locking elements, while the annular main body (35) of the first cam is offset axially from the annular main body (36) of the second cam.

8. Hinge mechanism according to claim 1, wherein there are **P=5** subsets each comprising one toothed element, the teeth of two consecutive toothed elements being offset from each other by an angular distance of 72 degrees and N not being a multiple of 5.

9. Hinge mechanism according to claim 8, wherein the control cams are metal wedges (31,32) guided in a tangential motion and biased by compression coil springs (41, 42).

10. Hinge mechanism according to claim 9, wherein the metal wedges are arranged in a same plane at the same axial position, the compression coil springs also preferably being arranged in the same plane.

11. Hinge mechanism according to claim 9, wherein the control hub (1) is a plastic control plate (9) comprising axially protruding lugs (90) configured to push the wedges when the control plate is rotating toward an unlocking position.

12. Hinge mechanism according to claim 1, wherein there are **P=3** subsets, each comprising two toothed elements.

13. Hinge mechanism according to one of claims 1 to 12, wherein an angular clearance (θ) is provided between the rest position (α0) of the control hub and the actuating position of each of the control cams (α1, α2), this angular clearance being greater than 3°.

14. **Vehicle seat** comprising at least one hinge mechanism (10) according to any one of claims 1 to 13.
